# EUROPÄISCHE PATENTSCHRIFT

(11) **EP 3 660 474 B1**
(45) Veröffentlichungstag und Bekanntmachung des Hinweises auf die Patenterteilung: **02.11.2022**
(21) Anmeldenummer: 19211774.5
(22) Anmeldetag: 27.11.2019
(51) Int. Cl.: G01J 3/44, G01N 21/65, G01J 3/02, G01J 3/28, G01J 3/10, G01J 3/427, H04N 5/372

(54) **VORRICHTUNG UND VERFAHREN ZUR RAMAN-SPEKTROSKOPIE**
APPARATUS AND METHOD FOR RAMAN SPECTROSCOPY
DISPOSITIF ET PROCÉDÉ DE SPECTROSCOPIE RAMAN

(30) Priorität: 30.11.2018 DE 102018130582
(43) Veröffentlichungstag der Anmeldung: 03.06.2020
(73) Patentinhaber: Ferdinand-Braun-Institut gGmbH, Leibniz-Institut für Höchstfrequenztechnik, 12489 Berlin (DE); Leibniz-Institut für Astrophysik Potsdam (AIP), 14482 Potsdam, Brandenburg (DE); Leibniz-Institut für Photonische Technologien e.V., 07745 Jena (DE)
(72) Erfinder: Sumpf, Bernd, 15745 Wildau (DE); Maiwald, Martin, 10707 Berlin (DE); Müller, André, 10407 Berlin (DE); Schmälzlin, Elmar, 14473 Potsdam (DE); Moralejo, Benito, 37900 Santa Marta de Tormes (Salamenca) (ES); Roth, Martin, 14482 Potsdam (DE); Stiebing, Clara, 07745 Jena (DE); Korinth, Florian, 13359 Berlin (DE); Krafft, Christoph, 01157 Dresden (DE)
(74) Vertreter: Gulde & Partner

(56) Entgegenhaltungen:
- US-A1- 2015 226 607
- SCHMÄLZLIN E ET AL: "Ultrafast imaging Raman spectroscopy of large-area samples without stepwise scanning", JOURNAL OF SENSORS AND SENSOR SYSTEMS, Bd. 5, Nr. 2, 13. Juli 2016 (2016-07-13), Seiten 261-271, XP055302039, Gottingen, DE ISSN: 2194-8771, DOI: 10.5194/jsss-5-261-2016
- MAIWALD M ET AL: "Rapid shifted excitation Raman difference spectroscopy with a distributed feedback diode laser emitting at 785 nm", APPLIED PHYSICS B ; LASERS AND OPTICS, SPRINGER, BERLIN, DE, Bd. 85, Nr. 4, 20. September 2006 (2006-09-20), Seiten 509-512, XP019459658, ISSN: 1432-0649, DOI: 10.1007/S00340-006-2459-8
- HEMING R ET AL.: "Optical CCD lock-in device for Raman difference spectroscopy", DGaO Proceedings 2008, 2008, XP055676792, Gefunden im Internet: URL:https://www.researchgate.net/profile/R ichard_Heming/publication/237268337_Optica l_CCD_lock-in_device_for_Raman_difference_ spectroscopy/links/0deec5332bddd81dd300000 0.pdf [gefunden am 2020-03-16]

## Beschreibung

Die Erfindung betrifft eine Vorrichtung und ein Verfahren zur Raman-Spektroskopie. Insbesondere betrifft die vorliegende Erfindung eine Vorrichtung und ein Verfahren zur Differenz-Raman-Spektroskopie mit kombinierter integraler Feldspektroskopie (IFS), bei denen mit mehreren Anregungswellenlängen eine Probe angeregt wird und schnell ortsaufgelöste Differenz-Raman-Spektren aufgenommen werden.

### Technologischer Hintergrund der Erfindung

Die Raman-Spektroskopie wird aufgrund ihrer Eignung zur In-situ- und Online-Analytik zunehmend in der industriellen Prozess- und Umweltmesstechnik eingesetzt. Ein Nachteil hierbei ist jedoch, dass einige Proben in der Praxis infolge von Fluoreszenz und/oder aufgrund ihrer Streueigenschaften Spektren liefern, deren Qualität durch eine hohe Untergrundstrahlung beeinträchtigt wird.

Typischerweise wird Anregungsstrahlung einer festen, jedoch nahezu beliebigen Anregungswellenlänge vom ultravioletten über den sichtbaren bis in den nahinfraroten Spektralbereich in eine zu untersuchende Probe eingekoppelt. Anschließend wird die von der Probe inelastisch gestreute Anregungsstrahlung mittels einer geeigneten Spektroskopie-Anordnung eingesammelt und spektral untersucht. In Abhängigkeit von den speziellen Materialeigenschaften der Probe zeigen sich dabei im aufgenommenen Spektrum einzelne Raman-Banden, welche einen genau bestimmten und für die Probe charakteristischen spektralen Abstand von der Anregungswellenlänge der Anregungsstrahlung aufweisen.

Eine bekannte Methode zur Verminderung der Untergrundstrahlung, welche bei einigen Proben um mehrere Größenordnungen größer ist als das gewünschte Raman-Spektrum, ist das SERDS-Verfahren (engl. shifted-excitation Raman difference spectroscopy). Bei dem SERDS-Verfahren werden zwei Raman-Spektren nacheinander mit verschiedenen Anregungswellenlängen aufgenommen und anschließend aus der Differenz der beiden Spektren ein Differenz-Raman-Spektrum gebildet. Da bei geringer Wellenlängenverschiebung der Anregungswellenlänge die Untergrundstrahlung konstant bleibt, aber die Raman-Banden sich verschieben, lässt sich durch das Differenz-Raman-Spektrum die Untergrundstrahlung vermindern. Darüber hinaus wird durch die Differenzbildung auch der Einfluss von Umgebungslicht vermindert, beispielsweise von Raum- oder Tageslichtanteilen, die in unerwünschter Weise zum Detektor gelangen. Jedoch darf sich zwischen den beiden Messungen die Probe nicht verändern, da sonst die Differenzbildung nicht die Untergrundstrahlung ausreichend vermindert. Ein weiteres Problem ist, dass ein Detektorrauschen existiert, welches mit steigender Intensität der Untergrundstrahlung ansteigt und eine Differenzbildung das Rauschen verdoppelt. Insbesondere biologische Proben bleichen unter Laserlicht aus und somit ändert sich die von ihnen abgegebene Untergrundstrahlung über die Anregungszeit. Somit lässt sich mit einem Differenz-Raman-Spektrum bei längeren Messzeiten nicht ausreichend die Untergrundstrahlung vermindern. Dieses Problem lässt sich durch kurze Messzeiten eindämmen, aber um ein ausreichendes Signal-zu-Rausch-Verhältnis zu erlangen, müssen die Messungen durch schnelles Hin- und Herschalten der Anregungswellenlänge oft wiederholt werden. Bei Kombination des SERDS-Verfahren mit der integralen Feldspektroskopie (IFS) ist ein schnelles Hin- und Herschalten zwischen den zwei Anregungswellenlängen nicht möglich. IFS ist ein bildgebendes Verfahren, welches hauptsächlich aus der Astronomie bekannt ist, mit dem gleichzeitig ein Bild des zu untersuchenden Bereichs und ortsaufgelöste Spektren generiert werden können, ohne dass ein zeitaufwändiger mechanischer Abtastprozess erforderlich ist. Das Problem bei der Kombination von IFS mit SERDS ist, dass für IFS großflächige fotosensitive Elemente verwendet werden, bei denen die Auslesezeiten oft bei bis zu 60 s liegen. Wenn nach jeder Einzelmessung ausgelesen werden muss, dann ist ein schnelles Hin- und Herschalten im Bereich von wenigen Sekunden oder gar Millisekunden zwischen den Messungen mit zwei Anregungswellenlängen nicht zu realisieren.

US 2015/0226607 A1 offenbart ein Verfahren und eine Vorrichtung zur Erfassung eines Raman-Spektrums mit z.B. zwei Lasern, die verschiedene Wellenlängen bereitstellen und entweder sequentiell oder simultan betrieben werden können. Die Vorrichtung umfasst weiterhin einen Detektor, z.B. eine CCD, zur Erfassung von Raman-Spektren.

### SCHMÄLZLIN E ET AL:

"Ultrafast imaging Raman spectroscopy of large area samples without stepwise scanning", JOURNAL OF SENSORS AND SENSOR SYSTEMS, Bd. 5, Nr. 2 (2016-07-13), ISSN: 2194-8771, DOI: 10.5194/jsss-5-261-2016 beschreibt die Verwendung von Multiplex-Spektrographen, die an Faserbündel gekoppelt sind, in der abbildenden Raman-Spektroskopie.

MAIWALD M ET AL: "Rapid shifted excitation Raman difference spectroscopy with a distributed feedback diode laser emitting at 785 nm", APPLIED PHYSICS B ; LASERS AND OPTICS, SPRINGER, BERLIN, DE, Bd. 85, Nr. 4 (2006-09-20), ISSN: 1432-0649, DOI: 10.1007/S00340-006-2459-8 offenbart ein schnelles Wechseln zwischen zwei Anregungsstrahlungen, für Raman-Differenz-Spektroskopie.

HEMING R ET AL.: "Optical CCD lock-in device for Raman difference spectroscopy", DGaO Proceedings 2008, offenbart eine Mehrkanal-Lock-in-Technik zur Detektion periodisch variierender Raman-Spektren bei der Verwendung einer rotierenden Mehrkammer-Messzelle, die mit zwei oder mehr verschiedenen Proben gefüllt ist. Für diese Anordnung ist die Akkumulation von Signalen durch Verschiebung von Ladungen auf einer CCD, für Raman-Differenz-Spektroskopie, beschrieben.

DE 100 27 100 A1 betrifft Verfahren und Vorrichtungen zum nicht-invasiven Bestimmen der Konzentration und Nachweisen von Substanzen mit Raman-Spektroskopie. Mindestens zwei Raman-Spektren werden unter unterschiedlichen physikalischen Bedingungen aufgenommen und miteinander verglichen.

DE 10 2014 018 726 A1 beschreibt eine Vorrichtung und ein Verfahren zur Prüfung von Wertdokumenten, wobei Sicherheitsmerkmale auf Raman- oder SERS-spektroskopischer Basis bei hohen Transportgeschwindigkeiten, mit einer Ortsauflösung im Millimeter-Bereich, detektiert werden können.

Es ist daher Aufgabe der vorliegenden Erfindung, ein Verfahren und eine Vorrichtung zur Raman-Spektroskopie anzugeben, bei denen die kombinierte Verwendung von SERDS und IFS verbessert wird.

### Zusammenfassung der Erfindung

Diese Aufgaben werden erfindungsgemäß durch die unabhängigen Patentansprüche gelöst. Bevorzugte Ausgestaltungen der Erfindung sind in den Unteransprüchen enthalten.

Die erfindungsgemäße Vorrichtung zur Raman-Spektroskopie ist in Anspruch 1 definiert.

Die Idee der vorliegenden Erfindung ist es, spektrale Informationen einer Vielzahl von Messungen in einem fotosensitiven Element zu speichern und diese Informationen erst nach der Detektion der Vielzahl von Messungen an ein Steuergerät zu übertragen. Hierbei ist es möglich großflächig, ortsaufgelöste Differenz-Raman-Spektren geringer Untergrundstrahlung in kurzer Zeit zu berechnen. Da die gespeicherten Informationen erst nach der Vielzahl von Messungen an das Steuergerät übertragen werden und nicht zwischenzeitlich ausgelesen werden, ist ein schnelles Hin- und Herschalten zwischen zwei Anregungswellenlängen nach jeder einzelnen Messung möglich und dadurch wird die Untergrundstrahlung effizient durch Differenzbildung von generierten Raman-Spektren vermindert. Bei nur einer Messung mit je einer Anregungswellenlänge halbiert sich die Messzeit und die Untergrundstrahlung wird effizient unterdrückt, da die spektralen Informationen der beiden Messungen zeitlich sehr nah beieinander liegen. Die Erfindung ist durch mehrere Ausführungsformen anwendbar. Durch eine Verschiebung von in einem fotosensitiven Element gespeicherten Ladungen, durch eine Verschiebung des Elements selbst oder durch eine Änderung bei der Einstrahloptik der Vorrichtung lassen sich die Vielzahl von Messungen auf dem fotosensitiven Element detektieren und speichern, bevor die spektralen Informationen an ein Steuergerät übertragen werden.

Demnach wird eine zu untersuchende Probe zunächst mit mindestens zwei Anregungsstrahlungen unterschiedlicher Anregungswellenlängen bestrahlt. Unter Anregungsstrahlung wird dabei insbesondere eine monochromatische Strahlung geringer spektraler Breite bei einer bestimmten Zentralwellenlänge als Anregungswellenlänge verstanden. Eine solche Anregungsstrahlung kann typischerweise von Diodenlasern bzw. Laserdioden im Einmodenbetrieb emittiert werden. Besonders bevorzugt sind dabei insbesondere Zentralwellenlängen im blauen und grünen Spektralbereich mit spektralen Breiten (FWHM) von unter 1 nm. Die Erzeugung der verschiedenen Anregungsstrahlungen kann beispielsweise durch die Verwendung mehrerer Laserdioden bei unterschiedlichen Emissionswellenlängen als Anregungswellenlängen erfolgen. Weiterhin können die mindestens zwei Anregungsstrahlungen bei verschiedenen Anregungswellenlängen auch durch eine einzelne, in ihrer Emissionswellenlänge veränderbare Laserdiode bzw. durch einen entsprechend spektral durchstimmbaren Diodenlaser erzeugt werden.

Die von der Probe gestreute Strahlung wird mittels eines Mittels zur spektralen Zerlegung spektral aufgespaltet. Dabei handelt es sich bei dem Mittel zur spektralen Zerlegung vorzugsweise um einen Spektrografen, welcher vorzugsweise ein Beugungsgitter, ein Prisma, ein volumenholographisches Gitter oder ein Gitterprisma (engl. Grism) umfasst. Als spektrale Zerlegung wird hierbei insbesondere eine Aufspaltung in einzelne Wellenlängen der aus verschiedenen Wellenlängen bestehenden von der Probe gestreuten Strahlung verstanden, bei der die Vielzahl der Wellenlängen verschiedene Intensitäten aufweisen können.

Vorzugsweise umfasst das fotosensitive Element eine Vielzahl von Bereichen und vorzugsweise umfassen die Bereiche jeweils eine Vielzahl von Unterbereichen. Mit einer größeren Anzahl der Bereiche hat das fotosensitive Element auch eine größere Aufnahmefläche und durch eine erhöhte Anzahl der Unterbereiche erhöht sich die spektrale Auflösung generierter Spektren.

Vorzugsweise ist das fotosensitive Element als ein CCD-Sensor ausgebildet. CCD-Sensoren haben eine hohe Lichtempfindlichkeit und ein geringes Rauschen aufgrund effizienter Flächennutzung.

Nach einem Aspekt der Erfindung sind die Informationen über die jeweils in den Unterbereichen detektierten Intensitäten als Ladungen in einem CCD-Sensor gespeichert und vorzugsweise nach jeder Detektion der jeweils von der Probe gestreuten und spektral zerlegten Strahlungen werden alle Ladungen im CCD-Sensor in ihrer Position geändert. Durch die Verschiebung der Ladungen in ungenutzte Regionen des CCD-Sensors können schnell hintereinander Informationen über mehrere Intensitätsspektren als Ladung im CCD-Sensor gespeichert werden. Das Verschieben der Ladung um eine Zeile ohne anschließende Digitalisierung dauert 0,1 ms und ist damit um mehrere Größenordnungen schneller, als das Auslesen des gesamten CCD-Sensors. Die Auslesezeit, also die Zeit, die benötigt wird, die in dem fotosensitiven Element gespeicherten Informationen an ein Steuergerät zu übertragen, erhöht sich proportional zur Größe des fotosensitiven Elements. Zusätzlich gibt es bei dieser Ausführungsform den Vorteil, dass die Strahlung immer auf die gleiche Position des fotosensitiven Elements trifft, und dadurch systematische Empfindlichkeitsunterschiede zwischen einzelnen Pixeln eliminiert werden.

Nach einem weiteren Aspekt der Erfindung wird nach jeder Detektion der jeweils von der Probe gestreuten und spektral zerlegten Strahlungen, eine Auftreffposition der auf dem fotosensitiven Element auftreffenden Strahlung verändert.

Vorzugsweise wird die Änderung der Auftreffposition durch ein Mittel zur periodischen Bewegung von Umlenkmitteln und/oder durch ein Mittel zur periodischen Bewegung des fotosensitiven Elements durchgeführt. Als Mittel zur periodischen Bewegung sind vorzugsweise Piezomotoren gemeint, diese lassen sehr schnelle Bewegungen zu und beeinträchtigen so die Messzeiten nicht negativ. Durch die Veränderung der Auftreffposition lassen sich ungenutzte Regionen des fotosensitiven Elements für die Speicherung weiterer spektraler Informationen nutzen und die Informationen werden erst nach einer Vielzahl von Messungen an ein Steuergerät übertragen.

Gemäß einem weiteren Aspekt der Erfindung umfasst die Vorrichtung ein Faserbündel, bestehend aus einer Vielzahl an Lichtleiterfasern. Vorzugsweise ist das Faserbündel ausgebildet, die von der Probe gestreute erste Strahlung und die von der Probe gestreute zweite Strahlung an das Mittel zur spektralen Zerlegung zu leiten.

Vorzugsweise sind die Enden der Lichtleiterfasern auf der probennahen Seite in einer zweidimensionalen Matrix angeordnet und die Enden der Lichtleiterfasern auf der von der Probe abgewandten Seite in einer eindimensionalen Reihe angeordnet. Durch diesen Aspekt der Erfindung wird das IFS-Verfahren angewandt und es wird damit gleichzeitig eine Vielzahl von ortsaufgelösten Spektren generiert. Daraus resultiert ein enormer Geschwindigkeitsvorteil verglichen mit der Generierung von der Vielzahl von ortsabhängigen Spektren nacheinander.

Vorzugsweise handelt es sich bei den Umlenkmitteln um Spiegel, Umlenkprismen oder die in einer eindimensionalen Reihe angeordneten Lichtleiterfasern.

Vorzugsweise sind die Bereiche disjunkte Bereiche, noch bevorzugter Bereiche, die in definierten Abständen zueinander angeordnet sind und noch bevorzugter parallele, äquidistant zueinander angeordnete, linienförmige Bereiche. Durch diese Formen lässt sich die Oberfläche des fotosensitiven Elements effizient nutzen.

Vorzugsweise wird nach der Übertragung der in dem fotosensitiven Element gespeicherten Intensitäts-Informationen der gestreuten und spektral zerlegten Strahlungen ein erstes Raman-Spektrum für die gestreute und spektral zerlegte erste Strahlung und ein zweites Raman-Spektrum für die gestreute und spektral zerlegte zweite Strahlung generiert.

Vorzugsweise wird aus dem ersten Raman-Spektrum und dem zweiten Raman-Spektrum ein Differenzspektrum berechnet. Durch die Differenzbildung wird die in den einzelnen Raman-Spektren vorhandene Untergrundstrahlung stark vermindert. Je weniger sich die zu untersuchende Probe zwischen den Messungen verändert desto besser wird bei der Differenzbildung die Untergrundstrahlung unterdrückt.

Vorzugsweise wird vor der Übertragung der in dem fotosensitiven Element gespeicherten Informationen an das Steuergerät zwischen den Anregungswellenlängen mit einer Frequenz im Bereich von 0,5 Hz und 2000 Hz hin- und hergewechselt, noch bevorzugter im Bereich von 2 Hz und 200 Hz und noch bevorzugter im Bereich von 5 Hz und 20 Hz. Durch einen schnellen Wechsel zwischen den Anregungsfrequenzen lässt sich die Hintergrundstrahlung besonders effizient vermindern.

Vorzugsweise werden mindestens 2 Messungen durchgeführt, bevor die in dem fotosensitiven Element gespeicherten Intensitäts-Informationen ausgelesen, z.B. an das Steuergerät übertragen werden. Noch bevorzugter werden mindestens 5 Messungen, noch bevorzugter mindestens 20 Messungen und noch bevorzugter mindestens 100 Messungen durchgeführt. Je mehr Messungen durchgeführt werden, desto besser ist das Signal-zu-Rausch-Verhältnis.

Vorzugsweise hat das fotosensitive Element eine fotosensitive Oberfläche von mindestens 0,5 cm², noch bevorzugter mindestens 2 cm², noch bevorzugter mindestens 5 cm². Durch eine größere Oberfläche des fotosensitiven Elements lassen sich größere Faserbündel anordnen und dadurch lassen sich größere Flächen von Proben durch das IFS-Verfahren untersuchen.

Das fotosensitive Element umfasst vorzugsweise mehr als 500x500 Pixel, noch bevorzugter mehr als 1000×1000 Pixel und noch bevorzugter mehr als 2000x2000 Pixel.

Das fotosensitive Element bietet genügend Platz, um vorzugsweise die Spektren von mehr als 10 Kanälen, noch bevorzugter mehr als 50 Kanälen und noch bevorzugter mehr als 200 Kanälen aufzunehmen.

Vorzugsweise ist das fotosensitive Element rechteckig und planar ausgebildet.

Vorzugsweise umfasst jeder Kanal des fotosensitiven Elements eine eindimensionale Reihe von Pixeln des fotosensitiven Elements. Die Kanäle sind vorzugsweise parallele, disjunkte Kanäle.

Vorzugsweise wird die Probe pro Messung für eine Zeit von maximal 2000 ms durch die erste oder zweite Anregungsstrahlung bestrahlt, noch bevorzugter maximal 500 ms, noch bevorzugter maximal 50 ms und noch bevorzugter maximal 5 ms. Je geringer die Zeiten der einzelnen Messungen, desto geringer ist die Gefahr, dass die Probe sich durch die Bestrahlung verändert, z.B. ausbleicht, aber desto schlechter ist das Signal-zu-Rausch-Verhältnis.

Ein weiterer Aspekt der Erfindung betrifft ein Verfahren zur Raman-Spektroskopie gemäß Anspruch 15.

### Kurzbeschreibung der Figuren

Die Erfindung wird nachfolgend in Ausführungsbeispielen anhand der zugehörigen Zeichnungen erläutert. Es zeigen:
- Figur 1: eine schematische Darstellung einer erfindungsgemäßen Vorrichtung zur Raman-Spektroskopie;
- Figur 2: eine schematische Darstellung eines Ausführungsbeispiels eines fotosensitiven Elements einer erfindungsgemäßen Vorrichtung bei der der Aufbau beschrieben wird;
- Figur 3: eine schematische Darstellung eines Ausführungsbeispiels eines fotosensitiven Elements einer erfindungsgemäßen Vorrichtung zu verschiedenen Zeitpunkten bei der die Grundidee der Erfindung erläutert wird;
- Figur 4: eine weitere schematische Darstellung eines Ausführungsbeispiels eines fotosensitiven Elements einer erfindungsgemäßen Vorrichtung zu verschiedenen Zeitpunkten bei der eine Ladungsverschiebung stattfindet;
- Figur 5: eine weitere schematische Darstellung eines Ausführungsbeispiels eines fotosensitiven Elements einer erfindungsgemäßen Vorrichtung zu verschiedenen Zeitpunkten bei die Position des Elements verändert wird;
- Figur 6: eine weitere schematische Darstellung eines Ausführungsbeispiels eines fotosensitiven Elements einer erfindungsgemäßen Vorrichtung zu verschiedenen Zeitpunkten bei der sich durch Änderungen im optischen System die Auftreffposition von Strahlung verändert;
- Figur 7: eine schematische Darstellung eines Ausführungsbeispiels eines Teils einer weiteren erfindungsgemäßen Vorrichtung zur Raman-Spektroskopie; und
- Figur 8: eine schematische Darstellung des Teils der in Figur 7 dargestellten Vorrichtung zur Raman-Spektroskopie aus einer anderen Perspektive.

### Detaillierte Beschreibung der Erfindung

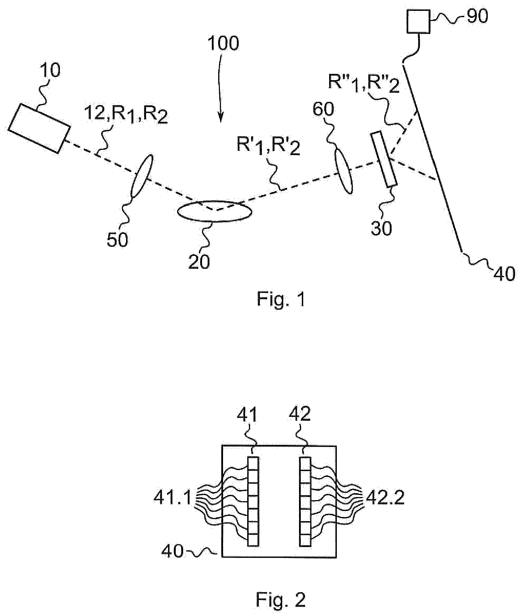

Figur 1 zeigt eine schematische Darstellung einer erfindungsgemäßen Vorrichtung zur Raman-Spektroskopie 100. Mittels einer Linse 50 wird die von einer schmalbandigen, kontinuierlich spektral über einen breiten Bereich durchstimmbaren und direkt modulierten Laserdiode 10 emittierte Anregungsstrahlung 12 in die zu untersuchende Probe 20 eingekoppelt. Im Ausführungsbeispiel werden eine ersten Anregungswellenlänge λ₁ = 457,7 nm der ersten Anregungsstrahlung R₁ und eine zweite Anregungswellenlänge λ₂ = 458,9 nm der zweiten Anregungsstrahlung R₂ mit zeitlichem Versatz in die Probe eingekoppelt. Die von der Probe 20 inelastisch gestreute Strahlung R₁', R₂' wird anschließend durch eine zweite Linse 60 nach spektraler Zerlegung durch einen Spektrografen 30 mit einem Beugungsgitter in einen Detektor mit einem CCD-Sensor 40 eingekoppelt. Durch den Spektrografen 30 wird die von der Probe 20 gestreute Strahlung R₁', R₂' in ihr Wellenlängenspektrum zerlegt. Durch den CCD-Sensor 40 mit mindestens einem ersten Bereich 41 (wie in Fig. 2 ff. detailliert beschrieben), wobei der erste Bereich 41 eine Vielzahl erster Unterbereiche 41.1 (wie in Fig. 2 ff. detailliert beschrieben) umfasst, wird nach dem Passieren des Spektrografen 30 aus der gestreuten und spektral zerlegten Strahlung R₁", R₂" je ersten Unterbereich 41.1 eine Intensität detektiert, wobei der CCD-Sensor 40 Informationen über die jeweils in den ersten Unterbereichen 41.1 detektierten Intensitäten in der Form von Ladung speichert. Die Vorrichtung 100 ist dazu ausgebildet, die in dem CCD-Sensor 40 gespeicherten Informationen erst nach Einstrahlung von Anregungsstrahlung unterschiedlicher Wellenlängen λ₁, λ₂ und nachfolgender Detektion von mindestens zwei verschiedenen von der Probe gestreuten und spektral zerlegten Strahlungen R₁", R₂", an ein Steuergerät 90 zu übertragen. Das Steuergerät 90 generiert nach der Übertragung der Informationen entsprechende Raman-Spektren bzw. ein Differenz-Raman-Spektrum. Die Übertragung der Informationen an ein Steuergerät dauert bei großflächigen fotosensitiven Elementen oft bis zu 60s. Dadurch, dass die Übertragung nur einmal stattfindet und nicht wie üblich nach jeder einzelnen Messung, verkürzt sich die erforderliche Gesamtzeit, je mehr Messungen vor dem Übertragen gespeichert werden. Zusätzlich wird das durch die Übertragung verursachte Ausleserauschen nur einmal auf die Messwerte angerechnet. Dies lässt sich besonders bevorzugt für ortsaufgelöste Differenz-Raman-Spektren z.B. mittels integraler Feldspektroskopie nutzen, da dort besonders große fotosensitive Elemente benutzt werden.

Bei dem ersten Mittel zur Einkopplung 50 und dem zweiten Mittel zur Einkopplung 60 kann es sich auch vorzugsweise um andere Abbildungsoptiken, beispielsweise einzelne Linsen, Linsensysteme oder Objektive, welche zur Ein- und Auskopplung von Strahlung in bzw. von der Probe 20 genutzt werden handeln.

Bei dem Mittel zur spektralen Zerlegung 30 kann es sich insbesondere um einen Spektrografen handeln, wobei der Spektrograf vorzugsweise ein Prisma, ein Beugungsgitter, ein volumenholographisches Gitter oder ein Gitterprisma umfasst. Insbesondere kann es sich dabei um eine Vielzahl von Anregungsstrahlungen Rₙ mit n→∞ mit unterschiedlichen Anregungswellenlängen λₙ aus dem zugänglichen spektralen Bereich der Laseremission der Laserdiode handeln. Laserdioden mit einer spektral ohne Modensprünge kontinuierlich durchstimmbaren Laserwellenlänge sind dabei besonders bevorzugt. Die unterschiedlichen Anregungswellenlängen λₙ werden daher beim Durchstimmen des Lasers nacheinander mit einem zeitlich differentiellinkrementellen Versatz in die Probe eingekoppelt. Noch bevorzugter wird eine Duallaserquelle verwendet, die zwei getrennt auf den Ausgang schaltbare Laser mit leicht unterschiedlichen Wellenlängen enthält.

Figur 2 zeigt eine schematische Darstellung des fotosensitiven Elements 40 einer erfindungsgemäßen Vorrichtung 100. Das fotosensitive Element 40 umfasst in diesem Ausführungsbeispiel einen ersten Bereich 41 mit einer Vielzahl an ersten Unterbereichen 41.1 und einen zweiten Bereich 42 mit einer Vielzahl an zweiten Unterbereichen 42.2. In diesem Ausführungsbeispiel sind die Bereiche 41, 42 als parallele, linienförmige Bereiche, die in definierten Abständen zueinander angeordnet sind, ausgebildet. Jedoch beschränkt sich die erfindungsgemäße Vorrichtung 100 nicht auf eine bestimmte Form oder Anzahl der Bereiche und Unterbereiche.

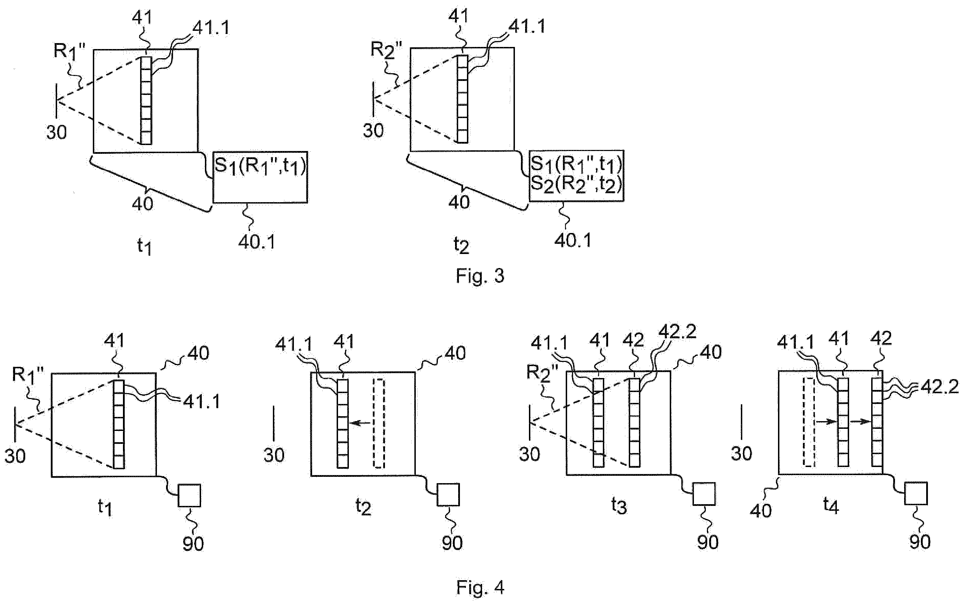

Figur 3 zeigt eine schematische Darstellung eines fotosensitiven Elements 40 einer erfindungsgemäßen Vorrichtung 100 zu verschiedenen Zeitpunkten t₁, t₂. Es werden zwei Zeitpunkte t₁, t₂ dargestellt, wobei beim Zeitpunkt t₁ mit einer ersten Anregungswellenlänge λ₁ eingestrahlt wird und beim Zeitpunkt t₂ mit einer zweiten Anregungswellenlänge λ₂ eingestrahlt wird. Das fotosensitive Element 40 umfasst in diesem Ausführungsbeispiel einen ersten Bereich 41 mit einer Vielzahl erster Unterbereiche 41.1. Im ersten Zeitpunkt t₁ wird mit der ersten Wellenlänge λ₁ eingestrahlt und das fotosensitive Element 40 speichert die Informationen 40.1 über die jeweils in den ersten Unterbereichen 41.1 detektierten Intensitäten der von der Probe 20 gestreute und spektral zerlegte ersten Strahlung R₁". Daraufhin wird im zweiten Zeitpunkt t₂ mit der zweiten Anregungswellenlänge λ₂ eingestrahlt und das fotosensitive Element 40 speichert zusätzlich die neuen Informationen über die jeweils in den ersten Unterbereichen 41.1 detektierten Intensitäten der von der Probe 20 gestreute und spektral zerlegte zweiten Strahlung R₂". Hierdurch lässt sich erreichen, dass die Informationen 40.1 nicht nach jeder Messung an ein Steuergerät 90 (nicht dargestellt) übertragen werden müssen und nur einmal eine Auslesezeit und ein Ausleserauschen für das fotosensitive Element 40 in Kauf genommen werden muss. Das Detektieren und Speichern kann mehrere Male wiederholt werden, bevor die Informationen 40.1 an das Steuergerät 90 übertragen werden.

Figur 4 zeigt eine weitere schematische Darstellung eines fotosensitiven Elements 40 einer erfindungsgemäßen Vorrichtung 100 zu verschiedenen Zeitpunkten t₁, t₂, t₃, t₄. Bei diesem Ausführungsbeispiel sind vier Zeitpunkte t₁, t₂, t₃, t₄, dargestellt. Im ersten Zeitpunkt t₁ wird mit der ersten Wellenlänge λ₁ eingestrahlt und das fotosensitive Element 40 speichert die Informationen über die jeweils in den ersten Unterbereichen 41.1 eines ersten Bereichs 41 detektierten Intensitäten, der von der Probe 20 gestreute und spektral zerlegte ersten Strahlung R₁", in Form von Ladung im ersten Bereich 41 des fotosensitiven Elements 40. Im zweiten Zeitpunkt t₂ findet keine Einstrahlung statt und es wird die gesamte in dem fotosensitiven Element 40 gespeicherte Ladung durch ein Steuergerät 90 in eine Richtung verschoben. Nach dieser Ladungsverschiebung befindet sich der erste Bereich 41 mit seinen ersten Unterbereichen 41.1 und den darin in Form von Ladung gespeicherten Informationen an einer anderen Position auf dem fotosensitiven Element 40. Daraufhin wird im dritten Zeitpunkt t₃ mit einer zweiten Anregungswellenlänge λ₂ eingestrahlt und das fotosensitive Element 40 speichert die Informationen über die jeweils in den zweiten Unterbereichen 42.2 eines zweiten Bereichs 42 detektierten Intensitäten, der von der Probe 20 gestreute und spektral zerlegte zweiten Strahlung R₂", in Form von Ladung im zweiten Bereich 42 der fotosensitiven Platte 40. Im vierten Zeitpunkt t₄ findet wiederum keine Einstrahlung statt und es wird die gesamte in dem fotosensitiven Element 40 gespeicherte Ladung durch ein Steuergerät 90 wieder verschoben, allerdings in die entgegengesetzte Richtung wie bei t₂. Die in t₁ detektierte Intensität in Form von Ladung befindet sich nun wieder auf der Position, auf der sie am Ende von t₁ war. Diese Vorgänge t₁ bis t₄ können mehrere Male wiederholt werden, wobei zwischen den zwei Anregungswellenlängen λ₁, λ₂ hin- und hergewechselt wird, und danach werden alle in dem fotosensitiven Element 40 gespeicherten Informationen einmal an das Steuergerät 90 übertragen.

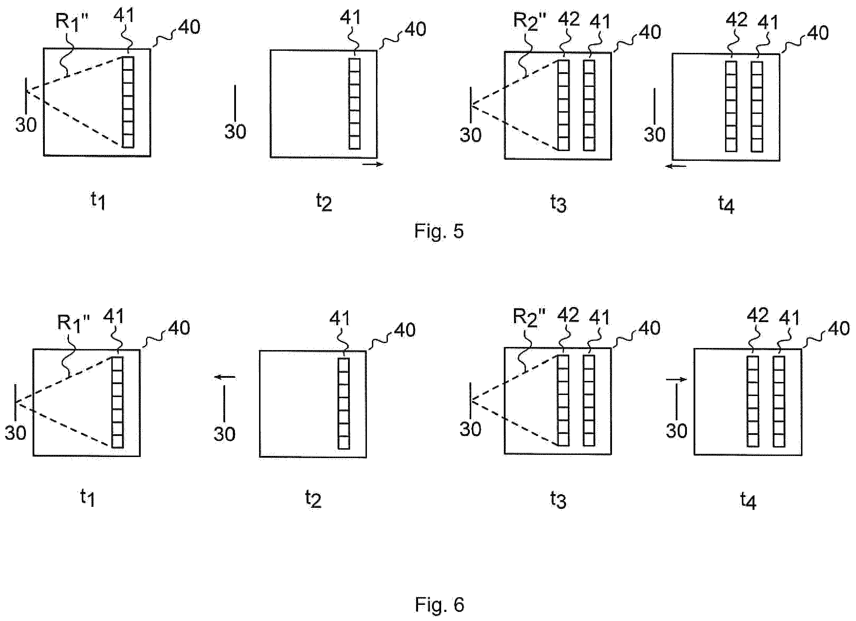

Figur 5 zeigt eine weitere schematische Darstellung eines fotosensitiven Elements 40 einer erfindungsgemäßen Vorrichtung 100 zu verschiedenen Zeitpunkten t_{1,} t₂, t₃, t₄. Bei diesem Ausführungsbeispiel sind vier Zeitpunkte t₁, t₂, t₃, t₄ dargestellt. Im ersten Zeitpunkt t₁ wird mit der ersten Wellenlänge λ₁ eingestrahlt und das fotosensitive Element 40 speichert die Informationen über die jeweils in den ersten Unterbereichen 41.1 eines ersten Bereichs 41 detektierten Intensitäten der von der Probe 20 gestreute und spektral zerlegte ersten Strahlung R₁". Daraufhin wird im zweiten Zeitpunkt t₂, bei dem keine Einstrahlung stattfindet, das fotosensitive Element 40 in eine Richtung verschoben. Hierdurch wird in einem dritten Zeitpunkt t₃, bei dem mit einer zweiten Anregungswellenlänge λ₂ eingestrahlt wird, eine von der Probe 20 gestreute und spektral zerlegte zweite Strahlung R₂" an einer anderen Position dem fotosensitiven Element 40 auftreffen und das fotosensitive Element 40 speichert die Informationen über die jeweils in den zweiten Unterbereichen 42.2 eines zweiten Bereichs 42 detektierten Intensitäten der von der Probe 20 gestreuten und spektral zerlegten zweiten Strahlung R₂". Im vierten Zeitpunkt t₄ findet wiederum keine Einstrahlung statt und es wird das fotosensitiven Element 40 wieder verschoben, allerdings in die entgegengesetzte Richtung wie bei t₂. Der erste Bereich 41 und der zweite Bereich 42 befinden sich nun wieder an der Position an der sie bei t₁ waren. Diese Vorgänge t₁ bis t₄ können mehrere Male wiederholt werden, wobei zwischen den zwei Anregungswellenlängen λ₁, λ₂ hin- und hergewechselt wird, und danach werden alle in dem fotosensitiven Element 40 gespeicherten Informationen einmal an das Steuergerät 90 übertragen.

Figur 6 zeigt eine weitere schematische Darstellung eines fotosensitiven Elements einer erfindungsgemäßen Vorrichtung bei verschiedenen Zeitpunkten t₁, t₂, t₃, t₄. Bei diesem Ausführungsbeispiel sind vier Zeitpunkte t₁, t₂, t₃, t₄ dargestellt. Im ersten Zeitpunkt t₁ wird mit der ersten Wellenlänge λ₁ eingestrahlt und das fotosensitive Element 40 speichert die Informationen über die jeweils in den ersten Unterbereichen 41.1 eines ersten Bereichs 41 detektierten Intensitäten der von der Probe 20 gestreute und spektral zerlegte ersten Strahlung R₁". Daraufhin wird im zweiten Zeitpunkt t₂, bei dem keine Einstrahlung stattfindet, durch geeignete Mittel zur Umlenkung, vorzugsweise Spiegel oder Umlenkprismen, die Position an der eine von der Probe 20 gestreute und spektral zerlegte zweite Strahlung R₂" auf das fotosensitive Element 40 auftreffen würde geändert. Diese Änderung der Auftreffposition der Strahlung kann durch z.B. eine Winkeländerung oder eine Verschiebung der Strahlung geschehen. Hierdurch wird in einem dritten Zeitpunkt t₃, bei dem mit einer zweiten Anregungswellenlänge λ₂ eingestrahlt wird, die von der Probe 20 gestreute und spektral zerlegte zweite Strahlung R₂" an einer anderen Position des fotosensitiven Elements 40 auftreffen und das fotosensitive Element 40 speichert die Informationen über die jeweils in den zweiten Unterbereichen 42.2 eines zweiten Bereichs 42 detektierten Intensitäten der von der Probe 20 gestreuten und spektral zerlegten zweiten Strahlung R₂". Im vierten Zeitpunkt t₄ findet wiederum keine Einstrahlung statt und es wird die Auftreffposition durch die Mittel zur Umlenkung wieder auf die Position von Zeitpunkt t₁ geändert. Diese Vorgänge t₁ bis t₄ können mehrere Male wiederholt werden, wobei zwischen den zwei Anregungswellenlängen λ₁, λ₂ hin- und hergewechselt wird, und danach werden alle in dem fotosensitiven Element 40 gespeicherten Informationen einmal an das Steuergerät 90 übertragen.

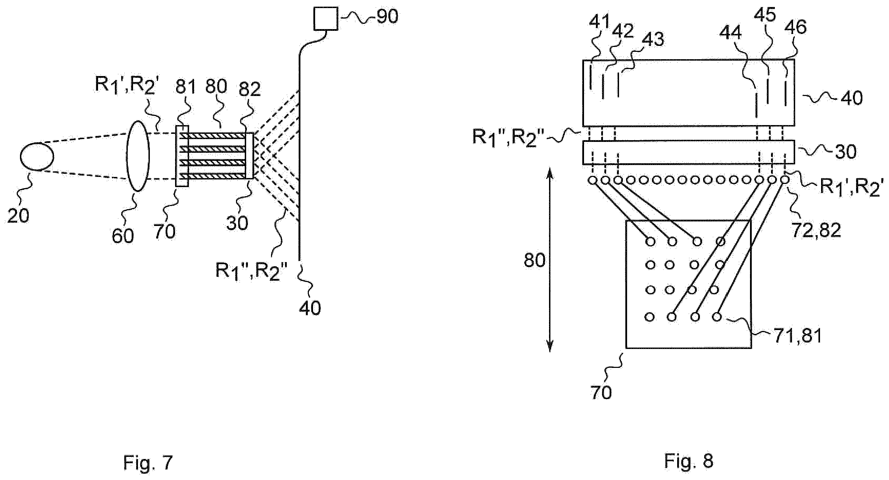

Figur 7 zeigt eine schematische Darstellung eines Teils einer weiteren erfindungsgemäßen Vorrichtung zur Raman-Spektroskopie 100. Hierbei wird zu dem Ausführungsbeispiel aus Fig. 1 zwischen dem Mittel zur spektralen Zerlegung 30 und der Probe 20 ein Faserbündel 70 bestehend aus einer Vielzahl an Lichtleiterfasern 80 platziert. Das Faserbündel 70 leitet die von der Probe 20 gestreute Strahlung R₁', R₂' an das Mittel zur spektralen Zerlegung 30 weiter. Dadurch, dass je Lichtleiterfaser 80 ein voneinander verschiedener Teil der von der Probe 20 gestreuten Strahlung R₁', R₂' an das Mittel zur spektralen Zerlegung 30 geleitet wird, findet am Mittel zur spektralen Zerlegung 30 eine spektrale Zerlegung je Lichtleiterfaser 80 statt. Es treffen hierdurch eine Vielzahl von unterschiedlichen gestreuten und spektral zerlegten Strahlungen R₁", R₂" auf das fotosensitive Element 40 auf.

Figur 8 zeigt eine schematische Darstellung des Teils der in Figur 7 dargestellten Vorrichtung 100 zur Raman-Spektroskopie aus einer anderen Perspektive. Die Enden der Lichtleiterfasern 80 sind auf der probennahen Seite 81 in einer zweidimensionalen Matrix 71 angeordnet. Der Teil der von der Probe 20 gestreuten Strahlung R₁', R₂' der in Richtung Mittel zur spektralen Zerlegung 30 abgegeben wird, wird durch die zweidimensionale Matrix 71 von Lichtleiterfasern 80 ortaufgelöst aufgenommen. Die von der Probe 20 abgewandte Seite 82 der Lichtleiterfasern 80 ist in einer eindimensionalen Reihe 72 vor dem Mittel zur spektralen Zerlegung 30 angeordnet. Die Zuordnung der einzelnen Enden der Lichtleiterfaser 80 in der Matrixanordnung 71 zu den Enden in der Reihenanordnung 72 ist bekannt aber beliebig. Je Lichtleiterfaser 80 wird von der Probe gestreute Strahlung R₁', R₂' an das Mittel zur spektralen Zerlegung 30 geleitet. Das Mittel zur spektralen Zerlegung 30 teilt die von den einzelnen Lichtleiterfasern 80 abgegebene Strahlung R₁', R₂' spektral auf und die von der Probe 20 gestreute und spektral zerlegte Strahlung R₁", R₂" wird in der Form von parallelen, äquidistanten zueinander angeordneten, linienförmigen Bereichen 41,..., 46 an die Oberfläche des fotosensitiven Elements 40 abgegeben. Die linienförmigen Bereiche verlaufen senkrecht zu der eindimensionalen Reihenanordnung 82 der Lichtleiterfaser 80. Durch dieses Ausführungsbeispiel lassen sich die von des fotosensitiven Elements 40 gespeicherten spektralen Informationen auf die Positionen der Lichtleiterfasern 80 in der zweidimensionalen Matrix 71 zurückführen und es lassen sich damit ortsabhängige Raman-Spektren der Probe 20 generieren.

### Bezugszeichenliste

- 10: Anregungsquelle
- 12: Anregungsstrahlung
- 20: Probe
- 30: Mittel zur spektralen Zerlegung
- 40: fotosensitives Element
- 40.1: gespeicherte spektrale Informationen in dem fotosensitiven Element
- 41: erster Bereich des fotosensitiven Elements
- 42: zweiter Bereich des fotosensitiven Elements
- 43...46: weitere Bereiche des fotosensitiven Elements
- 41.1: erste Unterbereiche des ersten Bereichs
- 42.2: zweite Unterbereiche des zweiten Bereichs
- 50: erstes Mittel zur Einkopplung
- 60: zweites Mittel zur Einkopplung
- 70: Faserbündel
- 80: Lichtleiterfasern
- 71: zweidimensionale Matrixanordnung der Lichtleiterfasern
- 72: eindimensionale Reihenanordnung der Lichtleiterfasern
- 81: probennahe Seite der Lichtleiterfaser
- 82: von der Probe abgewandte Seite der Lichtleiterfasern
- 90: Steuergerät
- 100: Vorrichtung zur Raman-Spektroskopie

- λ₁: erste Anregungswellenlänge
- λ₂: zweite Anregungswellenlänge
- R₁: erste Anregungsstrahlung (erster Anregungswellenlänge λ₁)
- R₂: zweite Anregungsstrahlung (zweiter Anregungswellenlänge λ₂)
- R₁': von der Probe gestreute erste Strahlung (erster Anregungswellenlänge λ₁)
- R₂': von der Probe gestreute zweite Strahlung (zweiter Anregungswellenlänge λ₂)
- R₁": von der Probe gestreute und spektral zerlegte erste Strahlung (erster Anregungswellenlänge λ₁)
- R₂": von der Probe gestreute und spektral zerlegte zweite Strahlung (zweiter Anregungswellenlänge λ₂)
- I₁: erste Intensität
- I₂: zweite Intensität
- t₁: erster Zeitpunkt
- t₂: zweiter Zeitpunkt
- t₃: dritter Zeitpunkt
- t₄: vierter Zeitpunkt

## Patentansprüche

1. Vorrichtung zur Raman-Spektroskopie (100) umfassend:
a) mindestens eine Anregungsquelle (10), dazu ausgebildet, eine zu untersuchende Probe (20) mit mindestens einer ersten Anregungsstrahlung (R₁) einer ersten Wellenlänge (λ₁) und einer zweiten Anregungsstrahlung (R₂) einer zweiten Wellenlänge (λ₂) zu bestrahlen, wobei sich die erste Wellenlänge (λ₁) von der zweiten Wellenlänge (λ₂) unterscheidet, und dazu ausgebildet, die erste Anregungsstrahlung (R₁) zeitlich versetzt und zeitlich getrennt zur zweiten Anregungsstrahlung (R₂) einzustrahlen,
b) ein Mittel zur spektralen Zerlegung (30) der von der Probe (20) gestreuten ersten Strahlung (R₁') und der von der Probe (20) gestreuten zweiten Strahlung (R₂'),
c) ein Detektor mit einem fotosensitiven Element (40) mit mindestens einem ersten Bereich (41), wobei der mindestens erste Bereich (41) eine Vielzahl erster Unterbereiche (41.1) umfasst, wobei die ersten Unterbereiche (41.1) jeweils ausgebildet sind, eine Intensität der von der Probe (20) gestreuten und spektral zerlegten ersten Strahlung (R₁") und/oder eine Intensität der von der Probe (20) gestreuten und spektral zerlegten zweiten Strahlung (R₂") zu detektieren, und wobei das fotosensitiven Element (40) ausgebildet ist, Informationen über die jeweils in den ersten Unterbereichen (41.1) detektierten Intensitäten zu speichern (40.1),
d) ein Steuergerät (90), dazu ausgebildet, aus der Vielzahl der detektierten Intensitäten bei Anregung mit der ersten Wellenlänge (λ₁) und der Vielzahl der detektierten Intensitäten bei Anregung mit der zweiten Wellenlänge (λ₂) mindestens ein Raman-Spektrum zu ermitteln,
**dadurch gekennzeichnet, dass**
e) die Vorrichtung (100) dazu ausgebildet ist, bei zeitlich versetzter und zeitlich getrennter Einstrahlung der ersten Strahlung (R₁) und zweiter Strahlung (R₂) auf die Probe (20), die in dem fotosensitiven Element (40) gespeicherten Informationen für die Intensität der von der Probe (20) gestreuten und spektral zerlegten ersten Strahlung (R₁") und für die Intensität der von der Probe (20) gestreuten und spektral zerlegten zweiten Strahlung (R₂") erst nach der zeitlich versetzten Detektion der von der Probe (20) gestreuten und spektral zerlegten ersten Strahlung (R₁") und der von der Probe (20) gestreuten und spektral zerlegten zweiten Strahlung (R₂") auszulesen und an das Steuergerät (90) zu übertragen.

2. Vorrichtung nach Anspruch 1, wobei das fotosensitive Element (40) eine Vielzahl von Bereichen (41, 42, 43, 44, 45, 46) umfasst, und wobei die Bereiche (41, 42, 43, 44, 45, 46) jeweils eine Vielzahl von Unterbereichen (41.1, 42.2) umfassen.

3. Vorrichtung nach einem der vorherigen Ansprüche, wobei das fotosensitive Element (40) als CCD-Sensor ausgebildet ist.

4. Vorrichtung nach Anspruch 3, wobei der CCD-Sensor, dazu ausgebildet ist, die Informationen über die jeweils in den Unterbereichen (41.1, 42.2) detektierten Intensitäten als Ladungen zu speichern, und wobei das Steuergerät (90), dazu ausgebildet ist, nach jeder Detektion der jeweils von der Probe (20) gestreuten und spektral zerlegten Strahlungen (R₁", R₂"), alle Ladungen im CCD-Sensor in ihrer Position zu ändern.

5. Vorrichtung nach Anspruch 1 oder 2, wobei nach jeder Detektion der jeweils von der Probe (20) gestreuten und spektral zerlegten Strahlungen (R₁", R₂"), eine Auftreffposition der auf das fotosensitive Element (40) auftreffenden Strahlung (R₁", R₂") verändert wird.

6. Vorrichtung nach einem der vorherigen Ansprüche, wobei die Vorrichtung (100) ein Faserbündel (70), bestehend aus einer Vielzahl an Lichtleiterfasern (80), umfasst, dazu ausgebildet, die von der Probe (20) gestreute erste Strahlung (R₁') und die von der Probe (20) gestreute zweite Strahlung (R₂') an das Mittel zur spektralen Zerlegung (30) zu leiten.

7. Vorrichtung nach Anspruch 6, wobei die Enden der Lichtleiterfasern (80) auf der probennahen Seite (81) in einer zweidimensionalen Matrix (71) angeordnet sind und die Enden der Lichtleiterfasern (80) auf der von der Probe (20) abgewandten Seite (82) in einer eindimensionalen Reihe (72) angeordnet sind.

8. Vorrichtung nach einem der Ansprüche 5 oder 7, wobei die Änderung der Auftreffposition durch ein Mittel zur periodischen Bewegung des fotosensitiven Elements (40) und/oder ein Mittel zur periodischen Bewegung von Umlenkmitteln durchgeführt wird.

9. Vorrichtung nach einem der Ansprüche 2 bis 8, wobei die Bereiche (41, 42, 43, 44, 45, 46) disjunkte Bereiche sind.

10. Vorrichtung nach Anspruch 9, wobei die Bereiche (41, 42, 43, 44, 45, 46) in definierten Abständen voneinander angeordnete Bereiche sind.

11. Vorrichtung nach Anspruch 10, wobei die Bereiche (41, 42, 43, 44, 45, 46) als parallele, äquidistante zueinander angeordnete, linienförmige Bereiche ausgebildet sind.

12. Vorrichtung nach einem der vorherigen Ansprüche, wobei das Steuergerät (90), dazu ausgebildet ist, nach der Übertragung der in dem fotosensitiven Element (40) gespeicherten Intensitäts-Informationen der gestreuten und spektral zerlegten Strahlungen (R₁", R₂") ein erstes Raman-Spektrum für die gestreute und spektral zerlegte erste Strahlung (R₁") und ein zweites Raman-Spektrum für die gestreute und spektral zerlegte zweite Strahlung (R₂") zu generieren.

13. Vorrichtung nach Anspruch 12, wobei das Steuergerät, dazu ausgebildet ist, ein Differenzspektrum aus dem ersten Raman-Spektrum und dem zweiten Raman-Spektrum zu berechnen.

14. Vorrichtung nach einem der vorherigen Ansprüche, wobei vor der Übertragung der in dem fotosensitiven Element (40) gespeicherten Informationen an das Steuergerät (90) zwischen einer Anregung der Probe (20) mit unterschiedlichen Anregungswellenlängen (λ₁, λ₂) mit einer Frequenz im Bereich von 0,5 Hz bis 2000 Hz hin- und hergeschaltet wird.

15. Verfahren zur Raman-Spektroskopie, folgende Verfahrensschritte umfassend:
a) Bestrahlen einer zu untersuchenden Probe (20) mit mindestens einer ersten Anregungsstrahlung (R₁) einer ersten Wellenlänge (λ₁) und einer zweiten Anregungsstrahlung (R₂) einer zweiten Wellenlänge (λ₂), wobei sich die erste Wellenlänge (λ₁) von der zweiten Wellenlänge (λ₂) unterscheidet und die erste Anregungsstrahlung (R₁) zeitlich versetzt und zeitlich getrennt zur zweiten Anregungsstrahlung (R₂) eingestrahlt wird,
b) spektrale Zerlegung der von der Probe (20) gestreuten ersten Strahlung (R₁') und der von der Probe (20) gestreuten zweiten Strahlung (R₂'),
c) Detektieren eines ersten Intensitätsspektrums (I₁) der von der Probe (20) gestreuten und spektral zerlegten ersten Strahlung (R₁") und eines zweiten Intensitätsspektrums (I₂) der von der Probe (20) gestreuten und spektral zerlegten zweiten Strahlung (R₂") mittels eines fotosensitiven Elements (40) und Speichern von Informationen über die detektierten Intensitätsspektren (I₁, I₂) auf dem fotosensitiven Element (40),
d) Auslesen der in dem fotosensitiven Element (40) gespeicherten Informationen über das erste Intensitätsspektrum (I₁) und über das zweite Intensitätsspektrum (I₂) mittels eines Steuergeräts (90) nach Detektion der von der Probe (20) gestreuten und spektral zerlegten ersten Strahlung (R₁") und der von der Probe (20) gestreuten und spektral zerlegten zweiten Strahlung (R₂"), und
e) Ermittlung mindestens eines Raman-Spektrums aus den ausgelesenen Informationen über die Intensitätsspektren (I₁, I₂) mittels des Steuergeräts (90).

## Claims

1. An apparatus for Raman spectroscopy (100), comprising:
a) at least one excitation source (10) designed to irradiate a sample (20) to be examined with at least a first excitation radiation (R₁) of a first wavelength (λ₁) and a second excitation radiation (R₂) of a second wavelength (λ₂), wherein the first wavelength (λ₁) is different from the second wavelength (λ₂), and designed to irradiate the first excitation radiation (R₁) temporally staggered and temporally separate from the second excitation radiation (R₂),
b) a means for spectral decomposition (30) of the first radiation (R₁') scattered by the sample (20) and of the second radiation (R₂') scattered by the sample (20),
c) a detector with a photosensitive element (40) with at least a first region (41), wherein the at least first region (41) comprises a plurality of first subregions (41.1), wherein the first subregions (41.1) are each designed to detect an intensity of the first radiation (R₁") scattered by the sample (20) and spectrally decomposed and/or an intensity of the second radiation (R₂") scattered by the sample (20) and spectrally decomposed, and wherein the photosensitive element (40) is designed to store (40.1) information about the respective intensities detected in the first subregions (41.1),
d) a controller (90) designed to identify at least one Raman spectrum from the plurality of the detected intensities upon excitation with the first wavelength (λ₁) and the plurality of the detected intensities upon excitation with the second wavelength (λ₂),
**characterized in that**
e) for temporally staggered and temporally separated irradiation of the first radiation (R₁) and second radiation (R₂) onto the sample (20), the apparatus (100) is designed to only read out the information stored in the photosensitive element (40) for the intensity of the first radiation (R₁") scattered by the sample (20) and spectrally decomposed and the intensity of the second radiation (R₂") scattered by the sample (20) and spectrally decomposed and transmit it to the controller (90) after the temporally staggered detection of the first radiation (R₁") scattered by the sample (20) and spectrally decomposed and the second radiation (R₂") scattered by the sample (20) and spectrally decomposed.

2. The apparatus according to Claim 1, wherein the photosensitive element (40) comprises a plurality of regions (41, 42, 43, 44, 45, 46) and wherein the regions (41, 42, 43, 44, 45, 46) each comprise a plurality of subregions (41.1, 42.2).

3. The apparatus according to any one of the preceding claims, wherein the photosensitive element (40) is designed as a CCD sensor.

4. The apparatus according to Claim 3, wherein the CCD sensor is designed to store the information about the respective intensities detected in the subregions (41.1, 42.2) as charges and wherein the controller (90) is designed to change all charges in the CCD sensor in their positions after each detection of the respective radiations (R₁", R₂") scattered by the sample (20) and spectrally decomposed.

5. The apparatus according to Claim 1 or 2, wherein after every detection of the respective radiations (R₁", R₂") scattered by the sample (20) and spectrally decomposed, an impact position of the radiation (R₁", R₂") impacting the photosensitive element (40) is changed.

6. The apparatus according to any one of the preceding claims, wherein the apparatus (100) comprises a fiber bundle (70), consisting of a plurality of optical fibers (80), designed to guide the first radiation (R₁') scattered by the sample (20) and the second radiation (R₂') scattered by the sample (20) to the means for spectral decomposition (30).

7. The apparatus according to Claim 6, wherein the ends of the optical fibers (80) on the sample-proximal side (81) are arranged in a two-dimensional matrix (71) and the ends of the optical fibers (80) on the side (82) facing away from the sample (20) are arranged in a one-dimensional row (72).

8. The apparatus according to either one of Claims 5 or 7, wherein the change of the impact position is performed by a means for periodically moving the photosensitive element (40) and/or a means for periodically moving deflection means.

9. The apparatus according to any one of Claims 2 to 8, wherein the regions (41, 42, 43, 44, 45, 46) are disjunct regions.

10. The apparatus according to Claim 9, wherein the regions (41, 42, 43, 44, 45, 46) are regions which are arranged at defined distances from one another.

11. The apparatus according to Claim 10, wherein the regions (41, 42, 43, 44, 45, 46) are designed as parallel, line-shaped regions which are arranged equidistantly to one another.

12. The apparatus according to any one of the preceding claims, wherein the controller (90) is designed to generate a first Raman spectrum for the scattered and spectrally decomposed first radiation (R₁") and a second Raman spectrum for the scattered and spectrally decomposed second radiation (R₂") after the transmission of the intensity information about the scattered and spectrally decomposed radiations (R₁", R₂") stored in the photosensitive element (40).

13. The apparatus according to Claim 12, wherein the controller is designed to calculate a difference spectrum from the first Raman spectrum and the second Raman spectrum.

14. The apparatus according to any one of the preceding claims, wherein, before the transmission of the information stored in the photosensitive element (40) to the controller (90), it is switched back and forth between an excitation of the sample (20) with different excitation wavelengths (λ₁, λ₂) with a frequency in the range of 0.5 Hz to 2000 Hz.

15. A method for Raman spectroscopy comprising the following method steps:
a) irradiating a sample (20) to be examined with at least a first excitation radiation (R₁) of a first wavelength (λ₁) and a second excitation radiation (R₂) of a second wavelength (λ₂), wherein the first wavelength (λ₁) is different from the second wavelength (λ₂), and the first excitation radiation (R₁) is irradiated temporally staggered and temporally separate from the second excitation radiation (R₂),
b) spectrally decomposing the first radiation (R₁') scattered by the sample (20) and the second radiation (R₂') scattered by the sample (20),
c) detecting a first intensity spectrum (I₁) of the first radiation (R₁") scattered by the sample (20) and spectrally decomposed and a second intensity spectrum (I₂) of the second radiation (R₂") scattered by the sample (20) and spectrally decomposed by means of a photosensitive element (40) and storing information about the detected intensity spectra (I₁, I₂) on the photosensitive element (40),
d) reading out the information stored in the photosensitive element (40) about the first intensity spectrum (I₁) and about the second intensity spectrum (I₂) by means of a controller (90) after detection of the first radiation (R₁") scattered by the sample (20) and spectrally decomposed and of the second radiation (R₂") scattered by the sample (20) and spectrally decomposed, and
e) identifying at least one Raman spectrum from the read-out information about the intensity spectra (I₁, I₂) by means of the controller (90).

## Revendications

1. Dispositif de spectroscopie Raman (100) comprenant :
a) au moins une source d'excitation (10) formée pour irradier un échantillon (20) devant être examiné avec au moins un premier rayonnement d'excitation (R₁) d'une première longueur d'onde (λ₁) et un deuxième rayonnement d'excitation (R₂) d'une deuxième longueur d'onde (λ₂), la première longueur d'onde (λ₁) étant distincte de la deuxième longueur d'onde (λ₂), et formée afin d'émettre le premier rayonnement d'excitation (R₁) de façon décalée dans le temps et séparée dans le temps par rapport à au deuxième rayonnement d'excitation (R₂),
b) un moyen pour la décomposition spectrale (30) du premier rayonnement (R₁') diffusé par l'échantillon (20) et du deuxième rayonnement (R₂') diffusé par l'échantillon (20),
c) un détecteur avec un élément photosensible (40) avec au moins une première plage (41), l'au moins une première plage (41) comprenant une multiplicité de premières sous-plages (41.1), les premières sous-plages (41.1) étant respectivement formées afin de détecter une intensité du premier rayonnement (R₁") diffusé par l'échantillon (20) et décomposé de façon spectrale et/ou une intensité du deuxième rayonnement (R2") diffusé par l'échantillon (20) et décomposé de façon spectrale, et l'élément photosensible (40) étant formé afin d'enregistrer (40.1) des informations sur les intensités respectivement détectées dans les premières sous-plages (41.1),
d) un appareil de commande (90) formé afin de déterminer au moins un spectre Raman à partir de la multiplicité des intensités détectées lors de l'excitation avec la première longueur d'onde (λ₁) et de la multiplicité des intensités détectées lors de l'excitation avec la deuxième longueur d'onde (λ₂),
**caractérisé en ce que**
e) le dispositif (100) est formé afin de lire les informations enregistrées dans l'élément photosensible (40) pour l'intensité du premier rayonnement (R₁") diffusé par l'échantillon (20) et décomposé de façon spectrale et pour l'intensité du deuxième rayonnement (R₂") diffusé par l'échantillon (20) et décomposé de façon spectrale seulement après la détection décalée dans le temps du premier rayonnement (R₁") diffusé par l'échantillon (20) et décomposé de façon spectrale et du deuxième rayonnement (R₂") diffusé par l'échantillon (20) et décomposé de façon spectrale, et à les transmettre à l'appareil de commande (90), lors de l'irradiation de l'échantillon (20), décalée dans le temps et séparée dans le temps, par le premier rayonnement (R₁) et par le deuxième rayonnement (R₂).

2. Dispositif selon la revendication 1, l'élément photosensible (40) comprenant une multiplicité de plages (41, 42, 43, 44, 45, 46), et les plages (41, 42, 43, 44, 45, 46) comprenant respectivement une multiplicité de sous-plages (41.1, 42.2).

3. Dispositif selon l'une des revendications précédentes, l'élément photosensible (40) étant formé comme un capteur CCD.

4. Dispositif selon la revendication 3, le capteur CCD étant formé afin d'enregistrer les informations relatives aux intensités respectivement détectées dans les sous-plages (41.1, 42.2) comme des charges, et l'appareil de commande (90) étant formé afin de modifier toutes les charges dans le capteur CCD en ce qui concerne leur position, après chaque détection des rayonnements (R₁", R₂") respectivement diffusés par l'échantillon (20) et décomposés de façon spectrale.

5. Dispositif selon la revendication 1 ou 2, une position d'incidence du rayonnement frappant (R₁", R₂") l'élément photosensible (40) étant modifiée après chaque détection des rayonnements (R₁", R₂") respectivement diffusés par l'échantillon (20) et décomposés de façon spectrale.

6. Dispositif selon l'une des revendications précédentes, le dispositif (100) comprenant un faisceau de fibres (70) se composant d'une multiplicité de fibres optiques (80), formé afin de guider vers le moyen de décomposition spectrale (30) le premier rayonnement (R₁') diffusé par l'échantillon (20) et le deuxième rayonnement (R₂') diffusé par l'échantillon (20).

7. Dispositif selon la revendication 6, les extrémités des fibres optiques (80) sur le côté (81) proche de l'échantillon étant disposées en une matrice bidimensionnelle (71) et les extrémités des fibres optiques (80) sur le côté (82) éloigné de l'échantillon (20) étant disposées en une série unidimensionnelle (72).

8. Dispositif selon l'une des revendications 5 ou 7, la modification de la position incidente étant réalisée par un moyen pour le mouvement périodique de l'élément photosensible (40) et/ou par un moyen pour le mouvement périodique de moyens déflecteurs.

9. Procédé selon l'une des revendications 2 à 8, les plages (41, 42, 43, 44, 45, 46) étant des plages disjointes.

10. Dispositif selon la revendication 9, les plages (41, 42, 43, 44, 45, 46) étant des plages disposées à distance les unes des autres à des intervalles définis.

11. Dispositif selon la revendication 10, les plages (41, 42, 43, 44, 45, 46) étant formées comme des plages linéaires parallèles, disposées à équidistance les unes des autres.

12. Dispositif selon l'une des revendications précédentes, l'appareil de commande (90) étant formé afin de générer un premier spectre Raman pour le premier rayonnement (R₁") diffusé et décomposé de façon spectrale et un deuxième spectre Raman pour le deuxième rayonnement (R₂") diffusé et décomposé de façon spectrale, après la transmission des informations d'intensité enregistrées dans l'élément photosensible (40) des rayonnements (R₁", R₂") diffusés et décomposés de façon spectrale.

13. Dispositif selon la revendication 12, l'appareil de commande étant formé afin de calculer un spectre différentiel à partir du premier spectre Raman et du deuxième spectre Raman.

14. Dispositif selon l'une des revendications précédentes, une excitation alternée de l'échantillon (20) avec des longueurs d'onde d'excitation (λ₁, λ₂) différentes ayant une fréquence dans la plage de 0,5 Hz à 2 000 Hz étant effectuée avant la transmission des informations enregistrées dans l'élément photosensible (40) à l'appareil de commande (90).

15. Procédé de spectroscopie Raman, comprenant les étapes de procédé suivantes :
a) irradiation d'un échantillon (20) devant être examiné avec au moins un premier rayonnement d'excitation (R₁) d'une première longueur d'onde (λ₁) et un deuxième rayonnement d'excitation (R₂) d'une deuxième longueur d'onde (λ₂), la première longueur d'onde (λ₁) étant distincte de la deuxième longueur d'onde (λ₂) et le premier rayonnement d'excitation (R₁) étant émis de façon décalée dans le temps et séparée dans le temps par rapport à au deuxième rayonnement d'excitation (R₂),
b) décomposition spectrale du premier rayonnement (R₁') diffusé par l'échantillon (20) et du deuxième rayonnement (R₂') diffusé par l'échantillon (20),
c) détection d'un premier spectre d'intensité (I₁) du premier rayonnement (R₁") diffusé par l'échantillon (20) et décomposé de façon spectrale et d'un deuxième spectre d'intensité (I₂) du deuxième rayonnement (R₂") diffusé par l'échantillon (20) et décomposé de façon spectrale au moyen d'un élément photosensible (40) et enregistrement d'informations relatives aux spectres d'intensité détectés (I₁, I₂) sur l'élément photosensible (40),
d) lecture des informations enregistrées dans l'élément photosensible (40) relatives au premier spectre d'intensité (I₁) et au deuxième spectre d'intensité (I₂) au moyen d'un appareil de commande (90) après détection du premier rayonnement (R₁") diffusé par l'échantillon (20) et décomposé de façon spectrale et du deuxième rayonnement (R₂") diffusé par l'échantillon (20) et décomposé de façon spectrale, et
e) détermination d'au moins un spectre Raman à partir des informations lues relatives aux spectres d'intensité (I₁, I₂) au moyen de l'appareil de commande (90).
